# FASCICULE DE BREVET EUROPEEN

(11) **EP 0 529 389 B1**
(45) Date de publication et mention de la délivrance du brevet: **22.03.1995**
(21) Numéro de dépôt: 92113608.1
(22) Date de dépôt: 10.08.1992
(51) Int. Cl.: B60R 21/22, B60R 21/16

(54) **Véhicule automobile comportant un dispositif de sécurité muni d'un sac de protection gonflable**
Sicherheitseinrichtung in Form eines Gaskissens für Kraftfahrzeug
Gas cushion safety device for vehicles

(30) Priorité: 23.08.1991 FR 9110622
(43) Date de publication de la demande: 03.03.1993
(73) Titulaire: SMH Management Services AG, CH-2501 Biel (CH)
(72) Inventeur: Chevroulet, Tristan, CH-2000 Neuchâtel (CH); Béroud, Claude, CH-2738 Court (CH)
(74) Mandataire: Caron, Gérard

(56) Documents cités:
- WO-A-86/03130
- DE-A- 2 030 863
- DE-A- 2 044 114
- US-A- 3 582 107
- US-A- 3 694 003

## Description

L'invention concerne un véhicule automobile comportant un dispositif de sécurité muni d'un sac de protection gonflable par une source de gaz, le sac de protection étant destiné à s'intercaler entre les occupants du véhicule et les parties résistantes du véhicules se trouvant à proximité des occupants dans le cas d'un comportement anormal du véhicule, tel qu'un choc

Dans tous les véhicules, tels que les voitures, les camions ou véhicules analogues, fabriqués et vendus actuellement, les moyens de commande actionnables manuellement par le conducteur pour diriger son véhicule comprennent un volant monté sur une colonne de direction qui est couplée mécaniquement aux roues directrices.
En cas d'accident, par exemple en cas de collision avec un obstacle fixe ou un autre véhicule, le conducteur du véhicule peut être gravement blessé, voire même tué, en étant projeté violemment contre le volant ou, si ce dernier se déforme ou se casse, contre l'extrémité de la colonne de direction qui peut en outre être elle-même projetée dans l'habitacle de la voiture en direction du conducteur.

De même, un passager ayant pris place à côté du conducteur peut être grièvement blessé, ou même tué, en étant projeté violemment contre le panneau de bord et/ou le pare-brise du véhicule.

Une des mesures les plus efficaces qui ont été proposées et réalisées pour supprimer ou au moins atténuer ce danger consiste à équiper le véhicule d'un dispositif de sécurité comprenant des sacs de protection gonflables qui sont normalement vides et pliés dans des logements adéquats et qui sont gonflés très rapidement en cas de collision, ces sacs étant disposés et dimensionnés de manière que, lorsqu'ils sont gonflés, ils amortissent le choc du conducteur et de son passager contre le volant et, respectivement, contre le panneau de bord ou le parebrise.

Le logement destiné à contenir le sac de protection du conducteur en temps normal, c'est-à-dire lorsque ce sac est vide et plié, est généralement dans le moyeu du volant tandis que le sac de protection du ou des passagers est ménagé dans un compartiment du panneau de bord.

Il en découle d'une part que ce moyeu doit avoir des dimensions relativement importantes, ce qui peut nuire à la visibilité des instruments du panneau de bord, et d'autre part que ce sac ne peut pas avoir de grandes dimensions lorsqu'il est gonflé, ce qui limite son efficacité en cas d'accident.

Il en découle également que le sac de protection du conducteur et le sac de protection du passager doivent être distincts l'un de l'autre, ce qui augmente le coût de l'ensemble du dispositif de sécurité. De tels dispositif de sécurité sont décrits par exemple dans le document DE 2 123 325.

Le document FR 2 227 979 propose un autre dispositif de sécurité de ce genre. Dans ce document, le dispositif de sécurité comprend deux systèmes de sacs de protection, gonftables respectivement pour le conducteur et le ou les passagers. Ces systèmes de sacs se trouvent, dans un état replié, dans un compartiment situé au voisinage du plafond de l'habitacle du véhicule. Chaque système de sacs comprend une section de sac de retenue du torse et une section de sac formant un rideau latéral, ces deux sections étant fixées au plafond. Chacune de ces sections est connectée à une source de gaz éloignée des sacs par des tubes gonftables. La section du sac de retenue du torse est destinée à s'intercaler entre les occupants avant du véhicule et le volant ou le panneau de bord et la section de sac formant un rideau latéral est destinée à s'intercaler entre un occupant et une paroi latérale du véhicule. Un tel dispositif présente toutefois encore de nombreux inconvénients.

Un premier inconvénient réside dans le fait que les systèmes de sacs pour le conducteur et le ou les passagers sont indépendants ce qui entraîne un volume et un poids important à loger dans le compartiment et nécessite des sources de gaz séparées. Le coût d'un tel dispositif est donc élevé. Cela constitue par ailleurs un encombrement non négligeable au niveau du plafond du véhicule qui, pour ne pas gêner les occupants du véhicule, nécessite une augmentation de la hauteur du véhicule.

De plus, le fait que les sacs se déploient et se gonflent à partir du plafond de l'habitacle oblige les occupants à être correctement calés dans le fond de leur siège pour que les sacs soient efficaces au moment du gonflage. En effet, si l'un des occupants est légèrement penché en avant ou n'est pas complètement calé dans le fond de son siège au moment où l'accident se produit et où les sacs se gonflent, ces derniers vont, avec l'aide de la décélération qui accompagne l'accident, projeter la tête la première ledit occupant vers le volant ou le panneau de bord. On comprend donc aisément que dans cette configuration le dispositif n'est pas seulement inefficace mais aussi dangereux.

Un autre inconvénient consiste en ce que la source de gaz est éloignée des différentes sections de sac et en ce qu'elle est reliée à ces dernières par l'intermédiaire de canalisations en forme de tubes de relativement faible section de sorte que le chemin de parcours du gaz est augmenté et la vitesse de gonflage est diminuée. De plus, sans dimensionnement spécifique de la section des tubes, la vitesse du gaz est limitée à la vitesse du son.

Le document DE 2 044 114 décrit un véhicule automobile comprenant un sac de protection dont le dispositif de déclenchement est associé à un mécanisme d'ouverture d'un volet situé à l'arrière du véhicule pour, dans le cas d'un gonflage du sac, s'ouvrir et éviter une suppression dans l'habitacle du véhicule. Ce document ne précise cependant d'aucune manière l'arrangment du sac de protection dans le véhicule.

Un véhicule comprenant les caractéristiques du préambule de la revendication 1 est déjà connu du document US 3 582 107. Toutefois, dans ce véhicule des sacs de protection distincts doivent être prévus respectivement pour le conducteur et pour le ou les passagers. Le sac de protection pour le conducteur est par exemple disposé dans le volant alors que le sac de protection pour les passagers est prévu dans un compartiment du tableau de bord de sorte que, dans son état gonflé, il s'étende entre le volant et la porte du passager. Ce véhicule présente ainsi les mêmes inconvénients que ceux mentionnés ci-dessus en liaison avec le document DE 2 123 325.

L'invention a donc pour but principal de remédier aux inconvénients de l'art antérieur susmentionné en fournissant un véhicule automobile muni d'un dispositif de sécurité à sac de protection gonflable dont l'efficacité est améliorée et dont le coût est considérablement diminué.

A cet effet, l'invention a pour objet un véhicule automobile comprenant la combinaison de caractéristiques définie par la revendication 1.

Ainsi, on obtient un véhicule muni d'un dispositif de sécurité comprenant un sac de protection en une seule pièce qui permet d'obtenir une protection efficace à la fois pour le conducteur et le ou les passagers de l'avant du véhicule tout présentant un poids et un encombrement considérablement diminué.

Selon une caractéristique avantageuse de l'invention, le sac comprend en outre au moins deux retours qui, dans l'état fonctionnel, s'étendent respectivement le long d'une paroi latérale du véhicule, ces retours étant destinés, dans cet état, à s'intercaler entre les occupants et les parois latérales du véhicule en cas du comportement anormal.

Ainsi, on obtient un véhicule muni d'un dispositif de sécurité comprenant un sac de protection en une seule pièce qui permet d'obtenir une protection efficace aussi bien contre une projection des occupants contre le panneau de bord et/ou contre les parois latérales du véhicule que contre une éjection latérale des occupants.

Selon une variante avantageuse de l'invention, le sac comprend au moins un retour supplémentaire disposé dans la partie centrale, ce retour étant aménagé pour s'étendre, dans l'état, gonflé entre les occupants du véhicule.

Grâce à ce ou ces retours supplémentaires les occupants du véhicule sont isolés les uns des autres de sorte qu'ils sont maintenus en place correctement dans leur siège lors de chocs et sont par conséquent protégés contre des blessures provenant d'éventuels chocs entre eux et /ou de violents déplacements de leur corps

Selon une caractéristique avantageuse de l'invention, le corps de véhicule comprend un panneau agencé pour permettre une mise en communication de l'habitacle avec l'extérieur lorsque la pression à l'intérieur de l'habitacle dépasse un seuil prédéterminé.

Grâce ces caractéristiques, on évite les lésions corporelles que peut provoquer la surpression qui est créée à l'intérieur de l'habitacle lors du gonflage du sac.

D'autres caractéristiques et avantages de l'invention apparaîtront à la lecture de la description suivante d'un mode de réalisation de l'invention donné à titre d'exemple illustratif et non limitatif en liaison avec les dessins annexés parmi lesquels :
- la figure 1 montre schématiquement en élévation latérale les contours d'un véhicule automobile dans lequel la partie centrale et les retours du sac de protection sont dans l'état gonflé et montre la position de l'occupant par rapport au sac;
- la figure 2 est une vue de dessus d'un véhicule automobile selon la figure 1, la partie supérieure du corps de véhicule ayant été omise;
- la figure 3 est une coupe transversale selon la ligne III-III de la figure 1;
- les figures 4 et 5 sont des figures semblables aux figures 1 et 2 dans lesquelles le sac de protection est dans l'état replié;
- la figure 6 est une coupe transversale selon la ligne VI-VI de la figure 4;
- la figure 7 est un détail agrandi d'un mode de fixation du panneau sur le corps du véhicule automobile selon l'invention; et
- la figure 8 est une vue en élévation d'une variante de réalisation d'un sac de protection équipant le véhicule automobile selon l'invention.

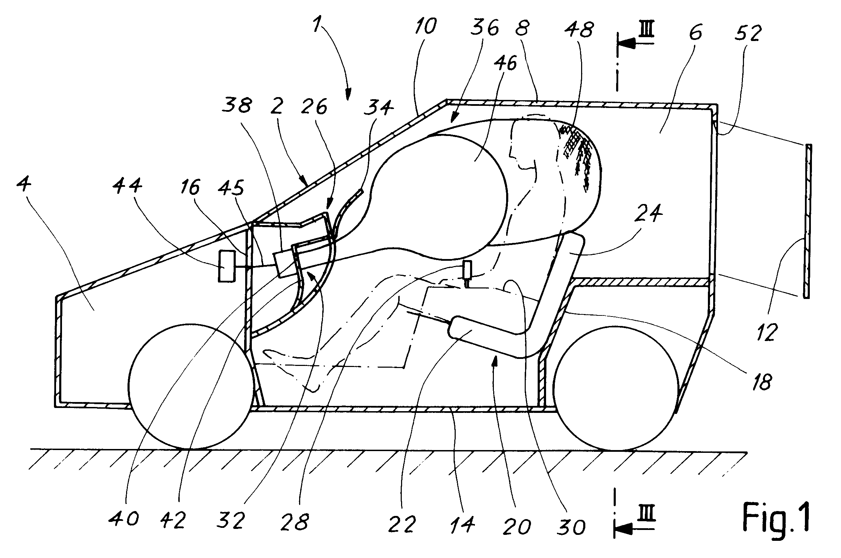

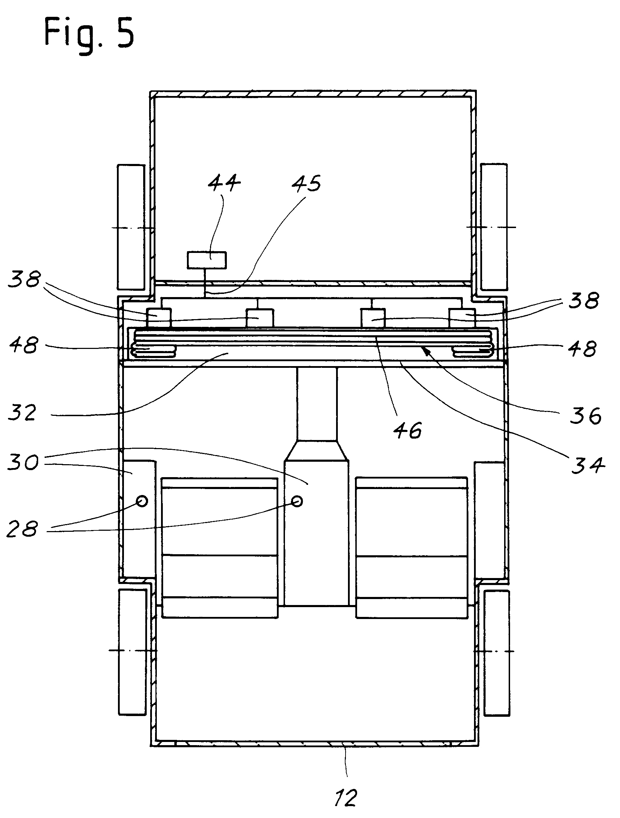

En se référant tout d'abord aux figures 1 à 6, on voit un véhicule automobile selon l'invention désigné par la référence générale 1. Ce véhicule présente classiquement un corps 2 comprenant essentiellement un compartiment moteur 4 et un habitacle 6 pour les occupants. L'habitacle 6 est défini par un toit 8, un pare-brise 10, une lunette arrière 12 des fenêtres latérales (non représentées) ménagées dans des parois latérales 13 formant portes, un plancher 14 et un tablier avant 16 qui sépare le compartiment moteur 4 de l'habitacle 6 et un tablier arrière 18

Comme cela ressort clairement des figures, on voit que l'habitacle 6 comprend deux sièges 20 équipés chacun d'une assise 22 et d'un dossier 24 et dans lesquels sont installés des occupants qui ont été représentés en traits mixtes aux dessins.

De plus, l'habitacle 6 comprend un panneau de bord 26 qui s'étend sensiblement sur toute la largeur du véhicule au voisinage supérieur du tablier avant 16.

L'habitacle 6 comprend également des moyens de commande 28 de direction du véhicule éloignés du panneau de bord 26 ou en d'autres termes des moyens de commande qui ne sont pas disposés dans l'espace libre entre le conducteur et le panneau de bord. Ces moyens de commande 28 comprennent, dans l'exemple illustré, deux manettes de direction incorporées chacune dans un accoudoir 30 du siège 20 de sorte que l'espace situé entre le panneau de bord 26 et le conducteur du véhicule est libre.

Selon l'invention, le panneau de bord 26 comprend un compartiment 32 fermé par un volet 34 articulé sur le panneau de bord et qui peut pivoter vers le pare-brise lors de son ouverture. Un sac de protection 36 du conducteur et du ou des passagers est logé dans le compartiment 32. Une source de gaz 38 et des moyens 40 pour relier le sac 36 à la source 38 sont ménagés à l'exterieur du compartiment 32. Plus précisément,la paroi de fond 42 du compartiment en liaison avec les moyens 40 servent à fixer la source de gaz 38 dans le véhicule. On notera dans l'exemple illustré que le sac de protection est relié à une pluralité de sources de gaz 38, en l'occurrence quatre.

Selon une variante, le sac de protection pourrait être relié à une unique source de gaz correctement dimensionnée et disposée sensiblement dans la zone médiane du sac.

Le sac de protection 36 est réalisé en un matériau souple au moins partiellement étanche aux gaz, par exemple en une toile de polyamide. Par un matériau au mois partiellement étanche aux gaz on comprendra un matériau qui retient les gaz pendant un temps suffisant pour permettre le gonflage du sac.

La source de gaz 38 est un système pyrotechnique classique dans lequel le gaz est engendré par exemple par la combustion d'un propergol à base de nitrure de sodium.

Le véhicule comprend en outre des moyens de déclenchement 44 automatique de la ou des sources de gaz 38. Ces moyens de déclenchement 44 sont reliés aux sources de gaz 38 par des liaison représentées schématiquement par des fils 45 aux dessins. Ces moyens de déclenchement 44 comprennent généralement un ou plusieurs accéléromètres qui sont installés, dans l'exemple illustré, dans le compartiment moteur 4 et qui sont agencés pour déclencher, par un circuit électronique approprié (non représenté), les sources de gaz 38 lors d'un comportement anormal du véhicule. Par comportement anormal on entend une accélération, une décélération, une compression et /ou une torsion excessifs du véhicule.

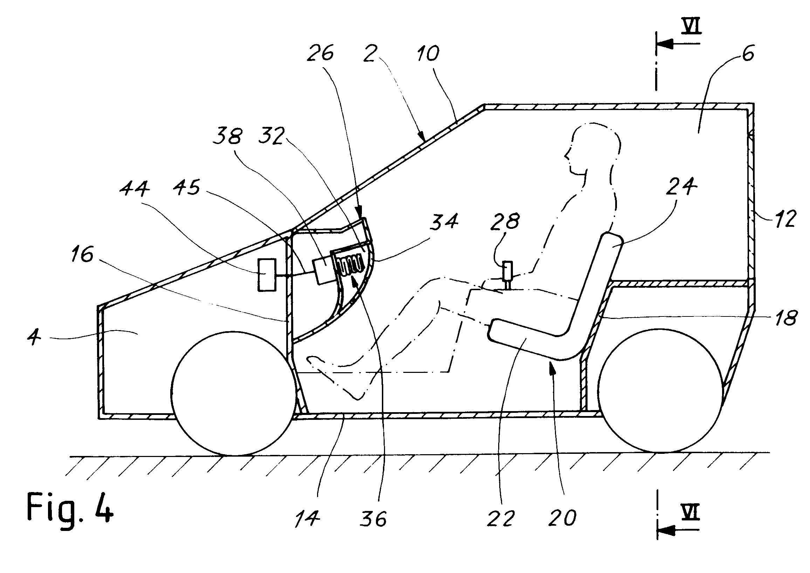

Le sac de protection 36 peut prendre un premier état replié dit non fonctionnel, visible aux figures 4 à 6, dans lequel il est totalement logé dans le compartiment 32. Dans ce cas, le volet 34 est fermé. Ce premier état représente l'état du sac de protection en temps normal, c'est-à-dire avant que les moyens de déclenchement 44 n'aient détecté un comportement du véhicule considéré comme anormal et qu'ils aient déclenché les source de gaz

Comme cela est visible en particulier sur les figures 1 à 3, le sac de protection 36 peut prendre un second état gonflé, dit fonctionnel, dans lequel il s'étend hors du compartiment 32 et occupe une partie importante de l'espace séparant le conducteur et le ou les passagers du panneau de bord 26. Ce second état représente l'état du sac de protection après qu'un comportement anormal du véhicule ait été détecté et que les moyens de déclenchement 44 ait déclenché le ou les sources de gaz 38.

Incidemment, on notera que le fait d'avoir prévu les moyens de commande de direction du véhicule éloignés du panneau de bord libère l'espace normalement occupé par le volant et permet de prévoir un unique sac de protection 36 pour protéger à la fois le conducteur et le ou les passagers.

De plus, le fait d'avoir prévu un unique sac de protection facilite sa fabrication et diminue considérablement son coût car le prix de revient d'un tel sac unique est inférieur à la somme des prix de revient de deux sacs distincts.

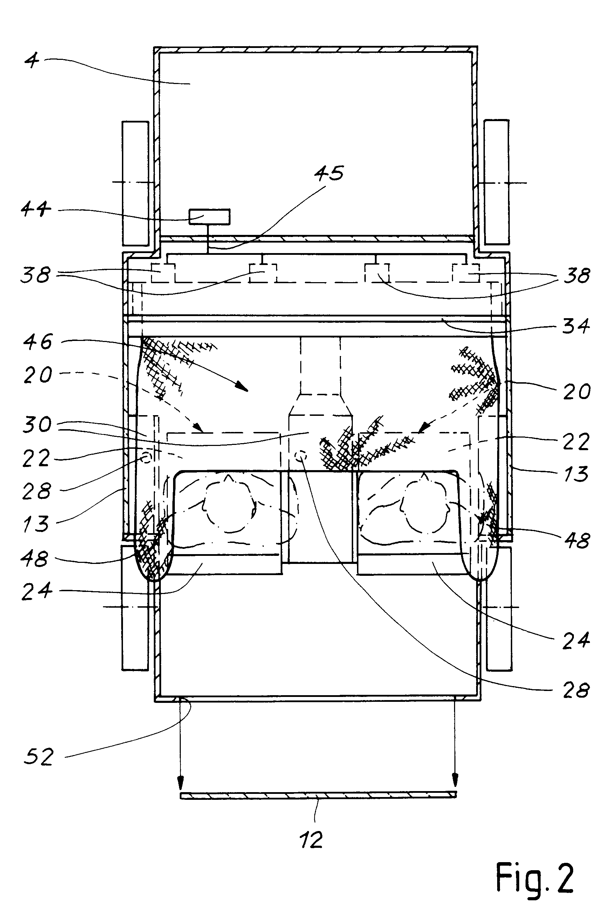

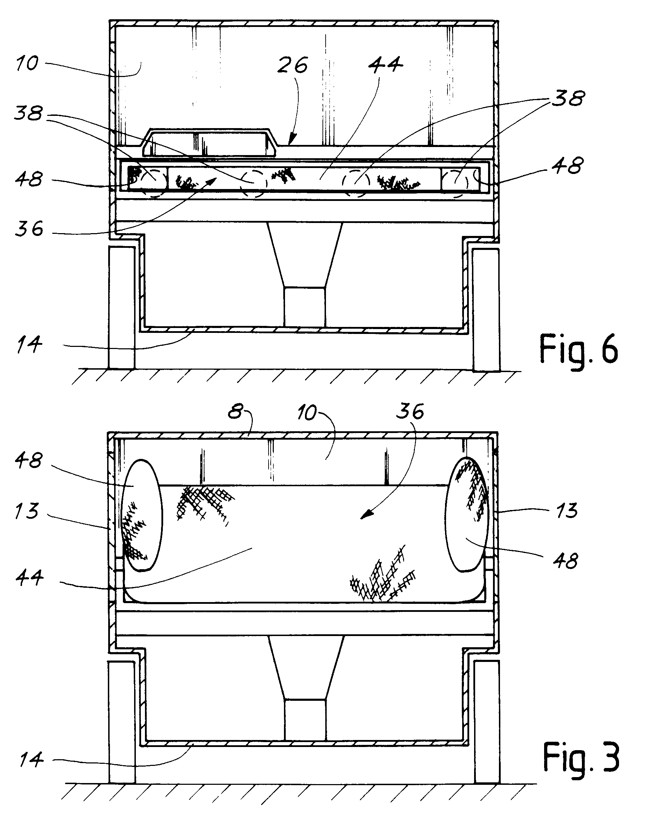

Comme cela ressort particulièrement des figures 2 et 3, on voit que le sac de protection 36, selon l'invention, comprend une partie centrale 46 qui est aménagée pour s'étendre, dans l'état fonctionnel, sur sensiblement toute l'étendue du panneau de bord 26, ou en d'autres termes sur toute la largeur de ce dernier. Le sac de protection 36 comprend en outre deux retours 48 qui s'étendent, dans l'état fonctionnel, chacun à chaque extrémité de la partie centrale 46 en direction des passagers le long des paroi latérales 13 du véhicule. Ces retours 48 forment chacun un rideau latéral et sont aménagés pour protéger les occupants d'un éventuel rebondissement contre ces parois 13 dans le cas d'un accident.

De préférence, la partie centrale 46 et les retours 48 ont des dimensions et sont agencés pour s'étendre, dans l'état gonflé, respectivement au niveau du torse et au niveau de la tête des occupants du véhicule.

La partie centrale 46 a la configuration générale d'un tube présentant une section transversale en forme de goutte (figure 1) dont la partie effilée est reliée aux sources de gaz tandis que les retours 48 ont la configuration d'un coussin sensiblement rectangulaire ayant une section transversale ovale allongée (figure 3).

En se référant aux figures 4 à 6 on voit que le sac de protection 36 ainsi que le compartiment 32 s'étendent sensiblement sur toute la largeur du panneau de bord 26. Une telle disposition du sac dans le compartiment permet de le plier en accordéon de sorte qu'il présente un encombrement relativement restreint et que l'écoulement du gaz dans le sac 36 est facilité et qu'il peut se déployer et se gonfler rapidement quand les sources de gaz sont déclenchées.

Bien entendu, le sac de protection peut dans une variante de réalisation non représentée ne pas comprendre de retours 48.

Le véhicule selon l'invention comprend en outre un panneau formé par la lunette arrière 12, laquelle est agencée pour permettre une mise en communication de l'habitacle 6 avec l'extérieur lorsque la pression à l'intérieur de ce dernier dépasse un seuil prédéterminé. En effet, lorsque le sac de protection 36 se gonfle dans l'état fonctionnel il engendre une brusque augmentation de pression à l'intérieur de l'habitacle qui est une fonction du rapport entre volume de l'habitacle et le volume du sac de protection. Cette augmentation peut être dangereuse pour les occupants du véhicule et provoquer par exemple des lésions du système auditif telle qu'une déchirure du tympan.

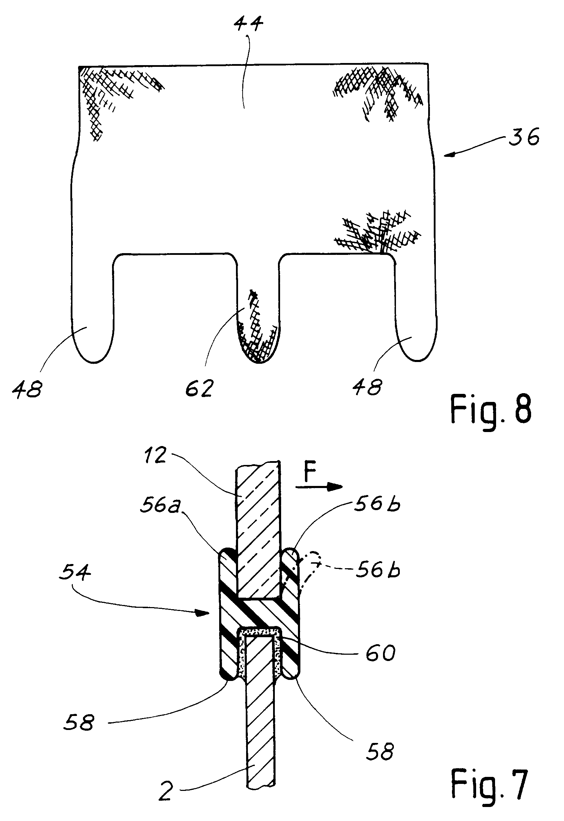

En se référant plus particulièrement à la figure 7 on voit que la lunette 12 est enchassée de façon classique dans une ouverture 52 pratiquée dans le corps du véhicule à l'aide d'un joint 54, réalisé par exemple en élastomère, qui en suit le contour. Ce joint 54 a une section transversale en forme de H et comprend une première paire de lèvres 56a, 56b qui pincent la lunette 12 et une seconde paire de lèvres 58 qui pincent le corps du véhicule

Le joint 54 présente une partie périphérique qui peut céder afin de libérer le panneau 12 dans le cas d'une surpression à l'intérieur de l'habitacle. Cette partie périphérique est formée par la lèvre 56b qui est dirigée vers l'extérieur et qui fléchit, dans le sens de la flèche F à la figure, pour s'effacer, comme cela est représenté en pointillé, lors de l'apparition de la surpression à l'intérieur de l'habitacle.

On notera à ce propos que la seconde paire de lèvres 58 est fixée à l'aide d'une colle 60 en plus de la fixation par pincement de sorte la grande partie de l'effort provoqué par la surpression est appliqué sur la lèvre 56b extérieure de la première paire

Selon une variante, la paire de lèvres qui est fixée par collage peut être la paire de lèvres 56 qui pince le panneau 12 et il va de soi que dans ce cas la partie périphérique du joint qui céde lors de la surpression est formée par la lèvre 58 qui est dirigée vers l'extérieur.

En se référant maintenant à la figure 8 on a représenté une variante de réalisation d'un sac de protection selon l'invention dans lequel on a prévu un retour 62 supplémentaire disposé dans la partie centrale 46 du sac 36. Ce retour 62 est disposé sensiblement dans la partie médiane de la partie centrale 46 afin de pouvoir s'étendre, dans l'état fonctionnel entre le conducteur et le passager du véhicule et ainsi les protéger d'un choc entre eux, notamment lors d'un choc latéral du véhicule avec un obstacle.

Le sac de protection décrit à la figure 8 est prévu pour être installé dans un véhicule comprenant deux occupants à l'avant du véhicule mais on comprendra également que l'on peut prévoir plus d'un retour supplémentaire si le nombre d'occupants augmente, les retours étant à chaque fois ménagé pour s'étendre entre chaque occupant.

Le fonctionnement du dispositif de sécurité formé par le sac de protection est le suivant
Lorsque le véhicule circule normalement, le sac de protection 36 est contenu dans le compartiment 32. Au moment où les moyens de déclenchement automatique 44 détectent un comportement anormal du véhicule ces derniers déclenchent les sources de gaz 38 de sorte que le sac de protection 36 reçoit des gaz de combustion (filtrés et refroidis), se dilate, et exerce une pression qui a pour effet de pousser le volet vers le pare-brise et de libérer le sac pour qu'il se gonfle jusqu'à ce qu'il parvienne à son état fonctionnel (figures 1 à 3). Dans le même temps, la surpression créée dans l'habitacle 6 agit sur la lunette arrière 12 de sorte que la lèvre 56b de son joint de fixation céde et libère la lunette mettant ainsi l'habitacle 6 en communication avec l'extérieur. La surpression provoquée par le gonflage du sac de protection n'a par conséquent aucun effet indésirable sur les occupants contrairement aux dispositif de l'art antérieur.

Pour fixer les idées, la succession de ces événements est réalisée en quelques dizaines de millisecondes.

## Revendications

1. Véhicule automobile, comprenant un siège de conducteur, un panneau de bord (26), des moyens de commande (28) de direction du véhicule, le panneau de bord comprenant un compartiment (32) fermé par au moins un volet (34) et dans lequel est aménagé un sac de protection (36) en un matériau souple au moins partiellement étanche aux gaz, le véhicule comprenant en outre une source de gaz (38), des moyens (40) pour relier le sac (36) à la source de gaz (38) et des moyens de déclenchement (44) automatique de la source de gaz (38) en réponse à un comportement anormal du véhicule, le sac (36) pouvant prendre un premier état replié, dit non fonctionnel, dans lequel il est totalement logé dans le compartiment (32) avant le déclenchement automatique de la source de gaz (38), et un second état gonflé, dit fonctionnel, dans lequel il s'étend hors du compartiment (32) après le déclenchement automatique de la source de gaz (38), ledit véhicule étant caractérisé en ce que lesdits moyens de commande sont éloignés du panneau de bord et disposés en dehors de l'espace compris entre ledit panneau de bord et le siège du conducteur et en ce que le sac comprend une partie centrale (46) qui est aménagée pour, dans l'état fonctionnel, s'étendre sur sensiblement toute l'étendue du panneau de bord (26) à partir de la porte conducteur jusqu'à la porte passager, la partie centrale (46) étant destinée, dans cet état, à s'intercaler entre les occupants et le panneau de bord en cas du comportement anormal du véhicule.

2. Véhicule automobile selon la revendication 1, caractérisé en ce que le sac (36) comprend en outre au moins deux retours (48) qui, dans l'état fonctionnel, s'étendent respectivement le long d'une paroi latérale du véhicule, ces retours (48) étant destinés, dans cet état, à s'intercaler entre les occupants et les parois latérales du véhicule en cas du comportement anormal du véhicule.

3. Véhicule automobile selon la revendication 1 ou 2, caractérisé en ce que le sac comprend au moins un retour supplémentaire (62) disposé dans la partie centrale (46), ce retour (62) étant aménagé pour s'étendre, dans l'état gonflé, entre les occupants du véhicule.

4. Véhicule automobile comprenant un corps (2) du véhicule définissant un habitacle (6), selon l'une des revendications 1 à 3, caractérisé en ce que le corps du véhicule comprend un panneau (12) agencé pour permettre une mise en communication de l'habitacle (6) avec l'extérieur lorsque la pression à l'intérieur de l'habitacle dépasse un seuil prédéterminé.

5. Véhicule automobile selon la revendication 4, dans lequel le panneau (12) est enchassé dans une ouverture (52) pratiquée dans le corps (2) du véhicule à l'aide d'un joint (54) qui en suit le contour, caractérisé en ce que le joint (54) comporte une partie périphérique (56) qui est susceptible de cèder lorsque la pression à l'intérieur de l'habitacle dépasse un seuil prédeterminé pour assurer une libération du panneau (12).

6. Véhicule automobile selon la revendication 4 ou 5 comprenant une lunette arrière (12), caractérisé en ce que le panneau (12) est constitué par la lunette arrière du véhicule

7. Véhicule automobile selon l'une quelconque des revendications 3 à 6, caractérisé en ce que, dans l'état gonflé, la partie centrale (46) et les retours (48) sont aménagés pour s'étendre respectivement au niveau du torse et au niveau de la tête des occupants du véhicule.

8. Véhicule automobile selon l'une quelconque des revendications précédentes, caractérisé en ce que le compartiment (32) ainsi que le sac (36) à l'état replié s'étendent sur toute l'étendue du panneau de bord. (26).

9. Véhicule automobile selon l'une quelconque des revendications précédentes, caractérisé en ce qu'il comprend une pluralité de sources de gaz (38).

## Claims

1. Automotive vehicle comprising a driver's seat, a dashboard (26), vehicle steering control means (28), the dashboard comprising a compartment (32) closed by at least one flap (34) and in which is arranged a protective bag (36) formed of supple material at least partially gas tight the vehicle further comprising a gas source (38), means (40) for coupling the bag (36) to the gas source (38) and means (44) for automatically releasing the gas source (38) in response to abnormal behaviour of the vehicle, the bag (36) assuming a folded non-operating first state in which it is entirely housed within the compartment (32) prior to automatic release of the gas source (38), and an inflated operating second state in which it extends out of the compartment (32) after automatic release of the gas source (38), said vehicle being characterized in that said control means are distant from said dashboard and arranged outside the space situated between said dashboard and said driver's seat and in that said bag comprises a central portion (46) which in the operating state is arranged so as to spread out over substantially the entire area of the dashboard (26) from the driver's door to the passenger's door, the central portion (46) being intended in such state to be interposed between the occupants and the dashboard in case of abnormal behaviour of the vehicle.

2. Automotive vehicle according to claim 1, characterized in that the bag (36) further comprises at least two rearward projections (48) which in the operating state extend respectively along a lateral wall of the vehicle, such projections (48) being intended in such state to be interposed between the occupants and the lateral walls of the vehicle in case of abnormal behaviour of the vehicle.

3. Automotive vehicle according to claim 1 or 2, characterized in that the bag comprises at least one additional rearward projection (62) arranged in the central portion (46), such projection (62) being arranged to extend in the inflated state between the vehicle occupants.

4. Automotive vehicle comprising a vehicle body (2) defining an occupant accommodation space (6), according to one of claims 1 to 3, characterized in that the vehicle body comprises a panel (12) arranged to permit communication of the accommodation space with the exterior when the pressure in the accommodation space exceeds a predetermined threshold.

5. Automotive vehicle according to claim 4, in which the panel (12) is sealed into an opening (52) formed in the vehicle body (2) by means of a packing (54) which follows the contour thereof, characterized in that the packing (54) includes a peripheral portion (56) adapted to yield when the interior pressure of the accommodation space exceeds a predetermined threshold in order to secure release of the panel (12).

6. Automotive vehicle according to claim 4 or 5 comprising a rear window (12), characterized in that the panel (12) is constituted by the vehicle rear window.

7. Automotive vehicle according to any one of claims 3 to 6, characterized in that the central portion (46) and rearward projections (48) in the inflated state are arranged to extend respectively at the trunk and head levels of the vehicle occupants.

8. Automotive vehicle according to any one of the preceding claims, characterized in that the compartment (32) as well as the bag (36) in the folded state extend over the entire area of the dashboard (26).

9. Automotive vehicle according to any one of the preceding claims, characterized in that it comprises a plurality of gas sources (38).

## Patentansprüche

1. Kraftfahrzeug mit einem Fahrersitz, einem Armaturenbrett (26), Steuermitteln (28) für die Fahrzeugrichtung, wobei das Armaturenbrett ein Abteil (32) umfaßt, das von mindestens einer Klappe (34) abgeschlossen ist und in dem ein Prallsack (36) aus einem faltbaren und mindestens teilweise gasdichten Material untergebracht ist, welches Fahrzeug ferner eine Gasquelle (38) umfaßt, Mittel (40) zum Verbinden des Prallsacks (36) mit der Gasquelle (38) und automatische Auslösemittel (44) für die Gasquelle (38) in Reaktion auf ein anormales Verhalten des Fahrzeugs, welcher Prallsack (36) einen ersten eingefalteten Zustand, als nicht funktionell bezeichnet, annehmen kann, indem er vollständig in dem Abteil (32) vor der automatischen Auslösung der Gasquelle (38) untergebracht ist und einen zweiten aufgeblasenen, als funktionell bezeichneten Zustand annehmen kann, indem er sich aus dem Abteil (32) nach automatischer Auslösung der Gasquelle (38) herauserstreckt, welches Fahrzeug dadurch gekennzeichnet ist, daß die Steuermittel von dem Armaturenbrett entfernt und außerhalb des Raumes untergebracht sind zwischen dem Armaturenbrett und dem Fahrersitz und daß der Prallsack eine zentrale Partie (46) umfaßt, die im funktionellen Zustand ausgebildet ist, um sich im wesentlichen über die gesamte Erstreckung des Armaturenbretts (26) von der Fahrertür bis zur Beifahrertür zu erstrecken, welche zentrale Partie (46) in diesem Zustand dazu bestimmt ist, sich zwischen den Passagieren und dem Armaturenbrett im Falle eines anormalen Verhaltens des Fahrzeugs einzufügen.

2. Kraftfahrzeug nach Anspruch 1, dadurch gekennzeichnet, daß der Prallsack (36) ferner mindestens zwei Ausstülpungen (48) umfaßt, die im funktionellen Zustand sich längs jeweils einer Seitenwandung des Fahrzeugs erstrecken, welche Ausstülpungen (48) in diesem Zustand dazu bestimmt sind, sich zwischen den Passagieren und den Seitenwandungen des Fahrzeugs im Falle eines anormalen Verhaltens des Fahrzeugs einzufügen.

3. Kraftfahrzeug nach Anspruch 1 oder 2, dadurch gekennzeichnet, daß der Prallsack mindestens eine zusätzliche Ausstülpung (62) umfaßt, die in der zentralen Partie (46) angeordnet ist, welche Ausstülpung (62) ausgebildet ist, um sich im aufgeblasenen Zustand zwischen die Passagiere des Fahrzeugs zu erstrecken.

4. Kraftfahrzeug mit einer Fahrzeugkarrosserie (2), die einen Innenraum (6) begrenzt, nach einem der Ansprüche 1 bis 3, dadurch gekennzeichnet, daß die Fahrzeugkarrosserie eine Tafel (12) umfaßt, ausgebildet, um den Innenraum (6) mit der Umgebung in Kommunikation zu setzen, wenn der Druck im Inneren des Innenraums eine vorbestimmte Schwelle übersteigt.

5. Kraftfahrzeug nach Anspruch 4, bei dem die Tafel (12) in eine Öffnung (52), die in die Fahrzeugkarrosserie (2) eingearbeitet ist, mit Hilfe einer Dichtung (54), die ihrer Kontur folgt, eingetrieben ist, dadurch gekennzeichnet, daß die Dichtung (54) eine Umfangspartie (56) umfaßt, die freisetzbar ist, wenn der Druck im Inneren des Innenraums eine vorbestimmte Schwelle übersteigt, um eine Freisetzung der Tafel (12) sicherzustellen.

6. Kraftfahrzeug nach Anspruch 4 oder 5 mit einem Rückfenster (12), dadurch gekennzeichnet, daß die Tafel (12) von dem Rückfenster des Fahrzeugs gebildet ist.

7. Kraftfahrzeug nach einem der Ansprüche 3 bis 6, dadurch gekennzeichnet, daß im aufgeblasenen Zustand die zentrale Partie (46) und die Ausstülpungen (48) ausgebildet sind, um sich in Höhe des Rumpfes bzw. in Höhe des Kopfes der Fahrzeugpassagiere zu erstrecken.

8. Kraftfahrzeug nach einem der vorangehenden Ansprüche, dadurch gekennzeichnet, daß das Abteil (32) wie auch der Prallsack (36) im eingefalteten Zustand sich über die gesamte Breite des Armaturenbretts (26) erstrecken.

9. Kraftfahrzeug nach einem der vorangehenden Ansprüche, dadurch gekennzeichnet, daß es eine Mehrzahl von Gasquellen (38) umfaßt.
